# EUROPEAN PATENT SPECIFICATION

(11) **EP 3 649 560 B1**
(45) Date of publication and mention of the grant of the patent: **03.09.2025**
(21) Application number: 18753222.1
(22) Date of filing: 06.07.2018
(51) Int. Cl.: G06F 16/31

(54) **A SEARCHING METHOD AND APPARATUS**
SUCHVERFAHREN UND -APPARAT
PROCÉDÉ ET APPAREIL DE RECHERCHE

(30) Priority: 07.07.2017 GB 201710925
(43) Date of publication of application: 13.05.2020
(73) Proprietor: Nalanda Technology Limited, Teddington, Middlesex TW11 9AA (GB)
(72) Inventor: BARRETT, Timothy, Teddington Middlesex TW11 9AA (GB)
(74) Representative: Scintilla Intellectual Property Ltd
(86) International application number: PCT/GB2018/051921
(87) International publication number: WO 2019/008384

(56) References cited:
- US-A1- 2005 138 000
- US-A1- 2008 148 147
- US-B1- 6 697 801

## Description

The present invention relates to methods and apparatus for performing a search. In particular, but not exclusively, the present invention relates to methods and apparatus for performing a full text enterprise search of one or more stored documents.

It is known to provide searching algorithms for retrieving information contained in documents stored on a computer system or in a database. Typically, the searching algorithm performs two separate tasks: indexing and searching. During indexing, the text of all the documents is scanned and a list of search terms is built. Then, during a search in response to a specific query, only the index is referenced, rather than the actual text.

The most commonly used indexing system is an inverted index. The text is scanned, and the words within the text are parsed. Each unique word becomes an entry in the inverted index, and the 'inverse' of this index is a list of documents within which the word occurs. The index has a single level in that the words are linked only to their parent documents. Other data may also be captured within an index entry, such as the position of the word within the document.

However, it is known that conventional searches frequently produce many false positives (documents that include the search term(s) used but which are not relevant to the intended search query). This is particularly the case when the query involves compound terms (two or more separate search terms). For example, a search using the terms "high, blood, pressure" would return a document with the following text: "The patient had low blood pressure. The patient's temperature was high.". Clearly, this is unlikely to be relevant. Performing an exact search would avoid this but could miss relevant results (such as "the patient's blood pressure was high"). The greater the size of the document, or the more common the search term(s), the greater the likelihood of a false positive. The search may return results in which the individual search terms are remote from each other in the document and, in reality, are unrelated to each other.

One known solution to this is to use proximity searching. A proximity search only returns documents in which the multiple search terms used are within a specified distance from each other in the document, this distance being the number of intervening words or characters. However, such a search offers limited improvement over non-proximity searches. In the above example concerning blood pressure, a search using a maximum proximity of only five words would still return the erroneous result. Also, the possibility of a false negative (a relevant document not being found) is substantially increased. This is even more likely in certain types of documents such as legal texts. For example, a search of the UK Patents Act 1977 using the terms "state of the art, oral" and a long, specified proximity of 40 words would still not return the following section:
"S2(2): The state of the art in the case of an invention shall be taken to comprise all matter (whether a product, a process, information about either, or anything else) which has at any time before the priority date of that invention been made available to the public (whether in the United Kingdom or elsewhere) by written or oral description, by use or in any other way."

It is desirable to provide an improved method of searching which produces more relevant results with fewer false positives and/or false negatives.

The text that is indexed/searched is commonly referred to in the art as unstructured data. A conventional search engine has no recognition of any structure of the text, not even as a collection of individual words. Rather, the text is effectively one long string of characters, which includes a number of 'whitespace' and punctuation characters (used to create the index). However, in reality, most document text is highly structured. This is partly due to conventions used by authors when creating documents (physical structure) and partly due to the structure of language itself (logical structure).

Regarding physical structure, the text is contained in documents, and each document typically comprises a number of sections, which comprise a number of paragraphs, which comprise a number of sentences, which comprise a number of words. In other words, the text typically has a tree structure.

Regarding logical structure, when an author of a text wishes to relate a concept (such as the property of high blood pressure), there are a number of ways of expressing this, some of which use a different ordering of the individual words. Nevertheless, it is highly likely that the full expression of the concept will occur in one sentence.

At a more abstract level, authors tend to segregate individual remarks, arguments etc. into separate paragraphs. Individual topics are discussed in separate sections, chapters etc.

It is desirable to provide an improved method of searching which accounts for or utilises the underlying structure of existing texts.

A conventional search will produce a number of results which ideally should be ranked before being provided to the user. However, in the absence of some other ranking criterion, each result is of equal merit. Consequently, it is common to apply a subjective or commercially motivated ranking algorithm to the results.

It is desirable to provide an improved method of searching which utilises an objective ranking procedure.

Other searching methods can be found in US 6,697,301 and US 2008/148147.

According to various aspects of the present invention there is provided a method of performing a search of a corpus of documents, a computer program product which is executable to perform a search of a corpus of documents and a system for performing a search of a corpus of documents as set out in the accompanying claims.

The invention will be described below, by way of example only, with reference to the accompanying drawings, in which:
Figure 1 is a flow chart of a method in accordance with the invention; and
Figure 2 is a diagrammatic view of a tree structure index used in the method of Figure 1.

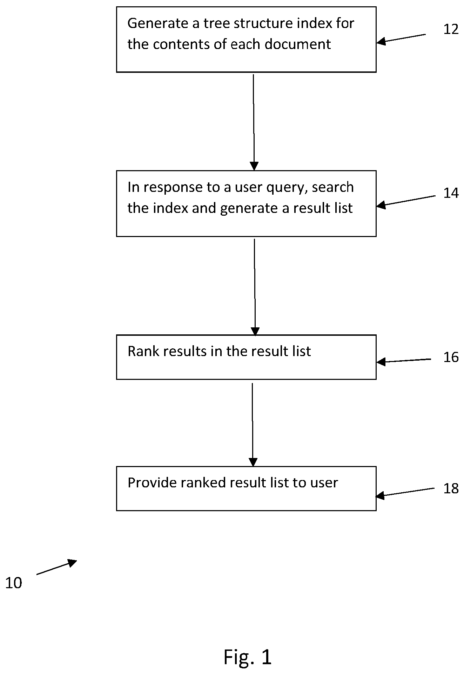

Figure 1 shows steps of a method 10 for performing a search of a corpus of documents. The search can be performed by the processor of a computer on documents stored in the memory of the computer. The method may be implemented using a computer program product.

The computer program product may be stored on or transmitted as one or more instructions or code on a computer-readable medium. Computer-readable media includes both computer storage media and communication media including any medium that facilitates transfer of a computer program from one place to another. A storage media may be any available media that can be accessed by a computer. By way of example such computer-readable media can comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Also, any connection is properly termed a computer-readable medium. For example, if the software is transmitted from a website, server, or other remote source using a coaxial cable, fibre optic cable, twisted pair, digital subscriber line (DSL), or wireless technologies such as infra-red, radio, and microwave, then the coaxial cable, fibre optic cable, twisted pair, DSL, or wireless technologies such as infra-red, radio, and microwave are included in the definition of medium. Disk and disc, as used herein, includes compact disc (CD), laser disc, optical disc, digital versatile disc (DVD), floppy disk and blu-ray disc where disks usually reproduce data magnetically, while discs reproduce data optically with lasers. Combinations of the above should also be included within the scope of computer-readable media. The instructions or code associated with a computer-readable medium of the computer program product may be executed by a computer, e.g., by one or more processors, such as one or more digital signal processors (DSPs), general purpose microprocessors, ASICs, FPGAs, or other equivalent integrated or discrete logic circuitry.

At step 12, the contents of each document is scanned and indexed to produce an index 20. The index 20 may not include stop words. Unlike conventional searches, the index 20 produced has a tree structure 20.

At step 14, in response to a user query, the index is searched for the search terms specified by the user. From this, a result list is generated which corresponds to the documents that include the search terms.

At step 16, the results are ranked. Details of the ranking procedure used are given below.

At step 18, the ranked result list is provided to the user.

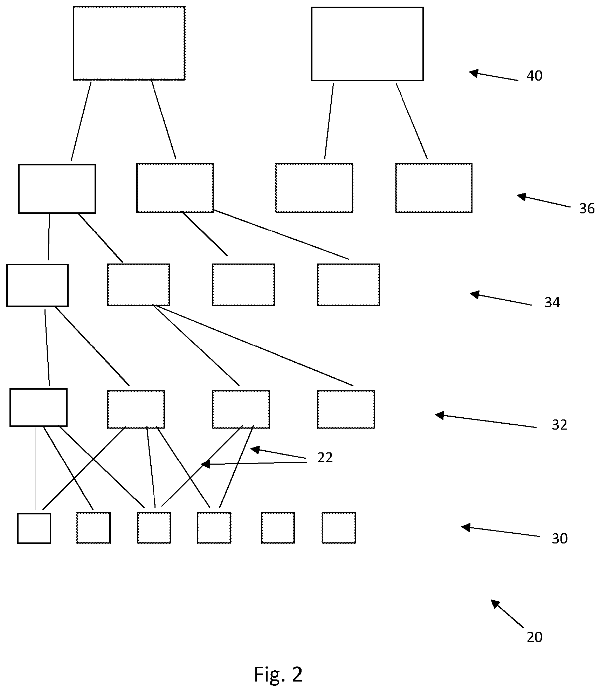

Figure 2 shows the tree structure index 20 used in the method. The index 20 comprises various nodes at different node levels. Nodes at a particular level are associated with other nodes at the levels immediately above and/or below and this is represented by the shown branches 22. In Figure 2, only a portion of the nodes and branches 22 are shown to aid clarity.

In this embodiment, the contents of the documents comprises text and so the tree structure 20 is a linguistic tree structure. The node levels of the tree structure 20 comprise words 30, sentences 32, paragraphs 34 and sections 36. The top node level is the documents 40 themselves.

The words of the text are the leaf nodes of the tree structure 20. Each word, excluding stop words, is stored in the index 20 and given a unique identifier.

The sentence node level 32 is a parent level to the word node level 30. During scanning of the text of each document, punctuation is identified to determine individual sentences. These sentences are stored in the index 20 and given a unique identifier. Each word in the index is mapped to each sentence in which it appears in the text. A particular word may appear in many sentences and this explains the many different branches 22 between words and sentences in Figure 2.

The paragraph node level 34 is a parent level to the sentence node level 32. Line breaks in the text of each document are used to identify individual paragraphs. These paragraphs are stored in the index 20 and given a unique identifier. Each sentence in the index 20 is mapped to each paragraph in which is appears in the text.

The section node level 36 is a parent level to the paragraph node level 34. Sections can be identified by page breaks in the text or text following a heading. A heading can be identified by a change in font size or style (such as bold text). These sections are stored in the index 20 and given a unique identifier. Each paragraph in the index 20 is mapped to each section in which is appears in the text.

Each section in the index 20 is mapped to each document in which is appears in the text. Typically, within a document, each section, paragraph and sentence will tend to be unique and so there will be a one to one mapping of the parent and child. However, this need not be the case as there may be duplicate text within a number of documents for various reasons.

The sentences in the index are then examined for the existence of meaningful entities, such as people, places, medicines, treatments etc. Entity instances are then added to the index, linked to the sentences in which these occur through their parent identifiers. This makes it possible to search for instances of specified entity types.

A user can submit a search request including one or more search terms. When a single search term is used, the searching procedure is fairly conventional in that a result list is generated which includes every document that contains an instance of the search term. The following describes the procedure used when more than one search term is used in the query.

The user can specify a node level for the query. The result list generated will then correspond only to documents which include each search term within the same node level. So, for example, the user may specify two search terms and a sentence node level 32 for the query. In which case, the result list generated will comprise only documents which include both search terms within the same sentence.

During the search, the search term associated with the fewest parent level instances in the index is determined. Then, it is determined if another search term of the query has the same parent level instances in the index.

This search procedure was carried out in a corpus of 418 medical records using the search terms "high, blood, pressure". A conventional search had previously been carried out which produced a result list of over 300 documents. In the majority of these results, the terms 'blood' and 'pressure' were related but the term 'high' was not. But it met the search criterion because it appeared somewhere in the document in relation to something else. The search according to the invention produced only five results, each of which was highly relevant. It was found that, although a medical professional could express that a patient had high blood pressure in a number of different ways linguistically, they would always use the three search terms in the same sentence.

The search results can be displayed in context, allowing the user to easily navigate the results. The user can select a result sentence and view the context in which the sentence occurs. The system determines the genealogy of each of the sentences identified as including the search terms. Therefore, the parents of each sentence are obtained by iterating recursively upwards through the multi-level structured text index, gathering each current parent's parent. The genealogy for a given sentence may therefore include the identifier of the paragraph in which it occurs, the section in which it occurs, and the document in which it occurs. These genealogy lists are combined, so that for each commonly occurring parent such as a document, a single genealogy tree is built of all of the recursively occurring child structures (sections, paragraphs and sentences) within the document.

The method includes ranking of the documents in the result list. This is done in an objective manner.

The number of parent level instances is determined for each result. The results are then ranked in order of the determined number. So, in the case of the above example involving a search of medical records, perhaps two of the five found records both contain two sentences which include all the search terms (the other three records containing only one sentence). These two records would have the highest ranking in the ranked result list.

A further objective ranking step is then carried out for the two highest ranked records (and separately for the three lower ranked records). The ratio of the number of parent level instances to the total number of parents in the associated document is determined for each result. For example, one of records may have a total number of sentences of 31, while the other record is considerably longer with a total number of 82 (as stated, both have two sentences in which all three search terms are used). This results in ratios of 0.065 and 0.024 respectively. It is assumed that shorter documents which still have the same high number of matching instances are likely to have an increased relevance. Therefore, the record with the higher ratio of 0.065 is ranked higher than the other record.

The method can include generating a second index. This index is of the meta data for the corpus of documents. The user can include meta data search terms in the query.

Particular users can be assigned different levels of access for performing a search. Also, the method can include redacting text which is designated as restricted. Restricted words and phrases will only be displayed to users having the appropriate authorisation.

Various modifications and improvements can be made to the above without departing from the scope of the invention.

## Claims

1. A method of performing a search of a corpus of documents (40), the method comprising:
indexing the contents of each document of the corpus to produce an index (20);
in response to a query comprising a plurality of search terms submitted by a user, searching the index (20) for each search term; and
providing to the user a result list corresponding to documents which include each search term,
wherein indexing the contents of each document (40) comprises generating a tree structure (20) for the contents, and wherein:
the submitted query includes a specified node level (30, 32, 34, 36, 40) of said tree structure (20) such that the result list provided to the user includes the one or each search term found at the specified node level (30, 32, 34, 36, 40);
the method includes determining for the specified node level (30, 32, 34, 36, 40), its parent level and further the number of parent level instances for each result and displaying the results in a ranked order of the determined number; and (i) the result list corresponds only to documents which include each search term within the same node level (30, 32, 34, 36, 40); or (ii) the method includes identifying the search term associated with the fewest parent level instances in the index (20).

2. A method as claimed in claim 1, wherein the contents comprises text and the tree structure (20) comprises a linguistic tree structure.

3. A method as claimed in claim 1 or claim 2, wherein the node levels of the tree structure (20) comprise two or more of words (30), sentences (32), paragraphs (34) and sections (36).

4. A method as claimed in any preceding claim, wherein the words (30) are the leaf nodes of the tree structure (20).

5. A method as claimed in any preceding claim, wherein the index (20) includes a sentence node level (32), the sentence node level (32) is a parent level to the word node level (30), and each word in the index (20) is mapped to each sentence (32) in which it appears in the text.

6. A method as claimed in any preceding claim, wherein the index (20) includes a paragraph node level (34), the paragraph node level (34) is a parent level to the sentence node level (32), and each sentence in the index (20) is mapped to each paragraph (34) in which it appears in the text.

7. A method as claimed in any preceding claim, wherein the index (20) includes a section node level (36), the section node level (36) is a parent level to the paragraph node level (34), and each paragraph in the index (20) is mapped to each section (36) in which it appears in the text.

8. A method as claimed in any preceding claim, wherein the index (20) comprises a plurality of documents (40) within the corpus, and wherein each section (36) in the index (20) is mapped to each document in which it appears in the text.

9. A method as claimed in any preceding claim, wherein the method includes:
(i) identifying punctuation and/or white space within the text and utilising the punctuation and/or white space to define a plurality of sentences of the text; and/or
(ii) identifying line breaks and/or page breaks within the text and utilising the line breaks and/or page breaks to define a plurality of paragraphs and/or sections of the text; and/or
(iii) identifying font styles and/or font sizes within the text and utilising the font styles and/or font sizes to define a plurality of sections of the text.

10. A method as claimed in any preceding claim, wherein the method includes determining the ratio of the number of parent level instances to the total number of parents in the associated document for each result and ranking the results in order of the determined ratio.

11. A method as claimed in any preceding claim, wherein the method includes generating a second index of meta data for the corpus of documents (40), and wherein the query includes a meta data search term submitted by the user.

12. A computer program product which is executable to perform a search of a corpus of documents (40), the product comprising:
instructions to index the contents of each document of the corpus to produce an index (20);
instructions to, in response to a query comprising a plurality of search terms submitted by a user, search the index (20) for each search term; and
instructions to provide to the user a result list corresponding to documents which include the or each search term,
wherein indexing the contents of each document (40) comprises generating a tree structure (20) for the contents, and wherein: the submitted query includes a specified node level (30, 32, 34, 36, 40) of said tree structure (20) such that the result list provided to the user includes the one or each search term found at the specified node level (30, 32, 34, 36, 40); and
the product includes instructions that determine for the specified node level (30, 32, 34, 36, 40), its parent level and further the number of parent level instances for each result and displaying the results in a ranked order of the determined number; and (i) the result list corresponds only to documents which include each search term within the same node level (30, 32, 34, 36, 40); or (ii) the method includes identifying the search term associated with the fewest parent level instances in the index (20).

13. A system for performing a search of a corpus of documents (40), the system comprising a processor adapted to:
index the contents of each document of the corpus to produce an index (20);
in response to a query comprising a plurality of search terms submitted by a user, search the index (20) for each search term; and
provide to the user a result list corresponding to documents which include each search term,
wherein indexing the contents of each document (40) comprises generating a tree structure (20) for the contents, and wherein: the submitted query includes a specified node level (30, 32, 34, 36, 40) of said tree structure (20) such that the result list provided to the user includes the one or each search term found at the specified node level (30, 32, 34, 36, 40);
the processor is also adapted to determine for the specified node level (30, 32, 34, 36, 40), its parent level and further the number of parent level instances for each result and displaying the results in a ranked order of the determined number; and (i) the result list corresponds only to documents which include each search term within the same node level (30, 32, 34, 36, 40); or (ii) the method includes identifying the search term associated with the fewest parent level instances in the index (20).

## Patentansprüche

1. Verfahren zum Durchsuchen eines Korpus von Dokumenten (40), wobei das Verfahren Folgendes umfasst:
Indizieren des Inhalts jedes Dokuments des Korpus, um einen Index (20) zu produzieren;
als Reaktion auf eine Abfrage, die eine Vielzahl von Suchbegriffen umfasst, die durch einen Benutzer eingereicht wird, Durchsuchen des Index (20) nach jedem Suchbegriff; und
Bereitstellen einer Ergebnisliste an den Benutzer, die Dokumenten entspricht, die jeden Suchbegriff beinhalten,
wobei das Indizieren des Inhalts jedes Dokuments (40) Erzeugen einer Baumstruktur (20) für den Inhalt umfasst, und wobei:
die eingereichte Abfrage eine spezifizierte Knotenebene (30, 32, 34, 36, 40) der Baumstruktur (20) beinhaltet, sodass die Ergebnisliste, die dem Benutzer bereitgestellt wird, den einen oder jeden Suchbegriff beinhaltet, der auf der spezifizierten Knotenebene (30, 32, 34, 36, 40) gefunden wird;
das Verfahren Bestimmen, für die spezifizierte Knotenebene (30, 32, 34, 36, 40), ihrer Elternebene und ferner der Anzahl an Elternebeneninstanzen für jedes Ergebnis und Anzeigen der Ergebnisse in einer geordneten Reihenfolge der bestimmten Anzahl beinhaltet; und (i) die Ergebnisliste nur Dokumenten entspricht, die jeden Suchbegriff innerhalb derselben Knotenebene (30, 32, 34, 36, 40) beinhalten; oder (ii) das Verfahren Identifizieren des Suchbegriffes assoziiert mit den wenigsten Elternebeneninstanzen in dem Index (20) beinhaltet.

2. Verfahren nach Anspruch 1, wobei der Inhalt Text umfasst und die Baumstruktur (20) eine linguistische Baumstruktur umfasst.

3. Verfahren nach Anspruch 1 oder Anspruch 2, wobei die Knotenebenen der Baumstruktur (20) zwei oder mehr von Wörtern (30), Sätzen (32), Absätzen (34) und Abschnitten (36) umfassen.

4. Verfahren nach einem vorhergehenden Anspruch, wobei die Wörter (30) die Blattknoten der Baumstruktur (20) sind.

5. Verfahren nach einem vorhergehenden Anspruch, wobei der Index (20) eine Satzknotenebene (32) beinhaltet, die Satzknotenebene (32) eine Elternebene zu der Wortknotenebene (30) ist und jedes Wort in dem Index (20) jedem Satz (32) zugeordnet ist, in dem es in dem Text erscheint.

6. Verfahren nach einem vorhergehenden Anspruch, wobei der Index (20) eine Absatzknotenebene (34) beinhaltet, die Absatzknotenebene (34) eine Elternebene zu der Satzknotenebene (32) ist und jeder Satz in dem Index (20) jedem Absatz (34) zugeordnet ist, in dem er in dem Text erscheint.

7. Verfahren nach einem vorhergehenden Anspruch, wobei der Index (20) eine Abschnittsknotenebene (36) beinhaltet, die Abschnittsknotenebene (36) eine Elternebene zu der Absatzknotenebene (34) ist und jeder Absatz in dem Index (20) jedem Abschnitt (36) zugeordnet ist, in dem er in dem Text erscheint.

8. Verfahren nach einem vorhergehenden Anspruch, wobei der Index (20) eine Vielzahl von Dokumenten (40) innerhalb des Korpus umfasst und wobei jeder Abschnitt (36) in dem Index (20) jedem Dokument zugeordnet ist, in dem er in dem Text erscheint.

9. Verfahren nach einem vorhergehenden Anspruch, wobei das Verfahren Folgendes beinhaltet:
(i) Identifizieren von Satzzeichen und/oder Leerzeichen innerhalb des Textes und Nutzen der Satzzeichen und/oder Leerzeichen, um eine Vielzahl von Sätzen des Textes zu definieren; und/oder
(ii) Identifizieren von Zeilenumbrüchen und/oder Seitenumbrüchen innerhalb des Textes und Nutzen der Zeilenumbrüche und/oder Seitenumbrüche, um eine Vielzahl von Absätzen und/oder Abschnitten des Textes zu definieren; und/oder
(iii) Identifizieren von Schriftstilen und/oder Schriftgrößen innerhalb des Textes und Nutzen der Schriftstile und/oder Schriftgrößen, um eine Vielzahl von Abschnitten des Textes zu definieren.

10. Verfahren nach einem vorhergehenden Anspruch, wobei das Verfahren Bestimmen des Verhältnisses der Anzahl an Elternebeneninstanzen zu der Gesamtanzahl an Eltern in dem assoziierten Dokument für jedes Ergebnis und Ordnen der Ergebnisse in Reihenfolge des bestimmten Verhältnisses beinhaltet.

11. Verfahren nach einem vorhergehenden Anspruch, wobei das Verfahren Erzeugen eines zweiten Index von Metadaten für den Korpus von Dokumenten (40) beinhaltet und wobei die Abfrage einen Metadatensuchbegriff beinhaltet, der durch den Benutzer eingereicht wird.

12. Computerprogrammprodukt, das ausführbar ist, um einen Korpus von Dokumenten (40) zu durchsuchen, wobei das Produkt Folgendes umfasst:
Anweisungen, um den Inhalt jedes Dokuments des Korpus zu indizieren, um einen Index (20) zu produzieren;
Anweisungen, um als Reaktion auf eine Abfrage, die eine Vielzahl von Suchbegriffen umfasst, die durch einen Benutzer eingereicht wird, den Index (20) nach jedem Suchbegriff zu durchsuchen; und
Anweisungen, um dem Benutzer eine Ergebnisliste bereitzustellen, die Dokumenten entspricht, die den oder jeden Suchbegriff beinhalten,
wobei das Indizieren des Inhalts jedes Dokuments (40) Erzeugen einer Baumstruktur (20) für den Inhalt umfasst, und wobei: die eingereichte Abfrage eine spezifizierte Knotenebene (30, 32, 34, 36, 40) der Baumstruktur (20) beinhaltet, sodass die Ergebnisliste, die dem Benutzer bereitgestellt wird, den einen oder jeden Suchbegriff beinhaltet, der auf der spezifizierten Knotenebene (30, 32, 34, 36, 40) gefunden wird; und
das Produkt Anweisungen beinhaltet, die für die spezifizierte Knotenebene (30, 32, 34, 36, 40) ihre Elternebene und ferner die Anzahl an Elternebeneninstanzen für jedes Ergebnis bestimmen und die Ergebnisse in einer geordneten Reihenfolge der bestimmten Anzahl anzeigen; und (i) die Ergebnisliste nur Dokumenten entspricht, die jeden Suchbegriff innerhalb derselben Knotenebene (30, 32, 34, 36, 40) beinhalten; oder (ii) das Verfahren Identifizieren des Suchbegriffes assoziiert mit den wenigsten Elternebeneninstanzen in dem Index (20) beinhaltet.

13. System zum Durchsuchen eines Korpus von Dokumenten (40), wobei das System einen Prozessor umfasst, der zu Folgendem ausgelegt ist:
Indizieren des Inhalts jedes Dokuments des Korpus, um einen Index (20) zu produzieren;
als Reaktion auf eine Abfrage, die eine Vielzahl von Suchbegriffen umfasst, die durch einen Benutzer eingereicht wird, Durchsuchen des Index (20) nach jedem Suchbegriff; und
Bereitstellen einer Ergebnisliste an den Benutzer, die Dokumenten entspricht, die jeden Suchbegriff beinhalten,
wobei das Indizieren des Inhalts jedes Dokuments (40) Erzeugen einer Baumstruktur (20) für den Inhalt umfasst, und wobei: die eingereichte Abfrage eine spezifizierte Knotenebene (30, 32, 34, 36, 40) der Baumstruktur (20) beinhaltet, sodass die Ergebnisliste, die dem Benutzer bereitgestellt wird, den einen oder jeden Suchbegriff beinhaltet, der auf der spezifizierten Knotenebene (30, 32, 34, 36, 40) gefunden wird;
der Prozessor auch ausgelegt ist, um für die spezifizierte Knotenebene (30, 32, 34, 36, 40) ihre Elternebene und ferner die Anzahl an Elternebeneninstanzen für jedes Ergebnis zu bestimmen und die Ergebnisse in einer geordneten Reihenfolge der bestimmten Anzahl anzuzeigen; und (i) die Ergebnisliste nur Dokumenten entspricht, die jeden Suchbegriff innerhalb derselben Knotenebene (30, 32, 34, 36, 40) beinhalten; oder (ii) das Verfahren Identifizieren des Suchbegriffes assoziiert mit den wenigsten Elternebeneninstanzen in dem Index (20) beinhaltet.

## Revendications

1. Procédé d'exécution d'une recherche dans un corpus de documents (40), le procédé comprenant :
l'indexation du contenu de chaque document du corpus pour la production d'un index (20) ;
en réponse à une requête, comprenant une pluralité de termes de recherche, soumise par un utilisateur, une recherche dans l'index (20) de chaque terme de recherche ; et
la fourniture à l'utilisateur d'une liste de résultats correspondant à des documents comprenant chaque terme de recherche,
ladite indexation du contenu de chaque document (40) comprenant la production d'une structure arborescente (20) pour le contenu, et :
ladite requête soumise comprenant un niveau de nœud spécifié (30, 32, 34, 36, 40) de ladite structure arborescente (20), de sorte que la liste de résultats fournie à l'utilisateur comprenne le ou chaque terme de recherche trouvé au niveau de nœud spécifié (30, 32, 34, 36, 40) ;
ledit procédé comprenant la détermination, pour le niveau de nœud spécifié (30, 32, 34, 36, 40), de son niveau parent et, en outre, du nombre de cas de niveau parent pour chaque résultat, et l'affichage des résultats dans un ordre de classement du nombre déterminé ; et (i) ladite liste de résultats ne correspondant qu'aux documents qui comprennent chaque terme de recherche au sein du même niveau de nœud (30, 32, 34, 36, 40) ; ou (ii) ledit procédé comprenant l'identification du terme de recherche associé au plus petit nombre de cas de niveau parent dans l'index (20).

2. Procédé selon la revendication 1, ledit contenu comprenant du texte, et ladite structure arborescente (20) comprenant une structure arborescente linguistique.

3. Procédé selon la revendication 1 ou la revendication 2, lesdits niveaux de nœuds de la structure arborescente (20) comprenant deux, ou plus, mots (30), phrases (32), paragraphes (34) et sections (36).

4. Procédé selon une quelconque revendication précédente, lesdits mots (30) étant les nœuds feuilles de la structure arborescente (20).

5. Procédé selon une quelconque revendication précédente, ledit index (20) comprenant un niveau de nœud de phrase (32), ledit niveau de nœud de phrase (32) étant un niveau parent du niveau de nœud de mot (30), et chaque mot dans l'index (20) étant mis en correspondance avec chaque phrase (32) dans laquelle il figure dans le texte.

6. Procédé selon une quelconque revendication précédente, ledit index (20) comprenant un niveau de nœud de paragraphe (34), ledit niveau de nœud de paragraphe (34) étant un niveau parent du niveau de nœud de phrase (32), et chaque phrase dans l'index (20) étant mise en correspondance avec chaque paragraphe (34) dans lequel elle figure dans le texte.

7. Procédé selon une quelconque revendication précédente, ledit index (20) comprenant un niveau de nœud de section (36), ledit niveau de nœud de section (36) étant un niveau parent du niveau de nœud de paragraphe (34), et chaque paragraphe dans l'index (20) étant mis en correspondance avec chaque section (36) dans laquelle il figure dans le texte.

8. Procédé selon une quelconque revendication précédente, ledit index (20) comprenant une pluralité de documents (40) au sein du corpus, et chaque section (36) dans l'index (20) étant mise en correspondance avec chaque document dans lequel elle figure dans le texte.

9. Procédé selon une quelconque revendication précédente, ledit procédé comprenant :
(i) l'identification de la ponctuation et/ou des espaces vides dans le texte, et l'utilisation de la ponctuation et/ou des espaces vides pour définir une pluralité de phrases du texte ; et/ou
(ii) l'identification de sauts de ligne et/ou de sauts de page dans le texte et l'utilisation des sauts de ligne et/ou des sauts de page pour définir une pluralité de paragraphes et/ou de sections du texte ; et/ou
(iii) l'identification de styles de police et/ou tailles de police dans le texte, et l'utilisation des styles de police et/ou des tailles de police pour définir une pluralité de sections du texte.

10. Procédé selon une quelconque des revendications précédentes, ledit procédé comprenant la détermination du rapport du nombre de cas de niveau parent sur le nombre total de parents dans le document connexe pour chaque résultat, et le classement des résultats dans l'ordre du rapport déterminé.

11. Procédé selon une quelconque revendication précédente, ledit procédé comprenant la génération d'un second index de métadonnées pour le corpus de documents (40), et ladite requête comprenant un terme de recherche de métadonnées soumis par l'utilisateur.

12. Produit-programme informatique exécutable pour l'exécution d'une recherche dans un corpus de documents (40), le produit comprenant :
des instructions pour l'indexation du contenu de chaque document du corpus pour la production d'un index (20) ;
des instructions de recherche dans l'index (20) de chaque terme de recherche en réponse à une requête comprenant une pluralité de termes de recherche soumis par un utilisateur ; et
des instructions pour la fourniture à l'utilisateur d'une liste de résultats correspondant à des documents comprenant le ou chaque terme de recherche,
ladite indexation du contenu de chaque document (40) comprenant la production d'une structure arborescente (20) pour le contenu, et : ladite requête soumise comprenant un niveau de nœud spécifié (30, 32, 34, 36, 40) de ladite structure arborescente (20) de sorte que la liste de résultats fournie à l'utilisateur comprenne le ou chaque terme de recherche trouvé dans le niveau de nœud spécifié (30, 32, 34, 36, 40) ; et
ledit produit comprenant des instructions déterminant, pour le niveau de nœud spécifié (30, 32, 34, 36, 40), son niveau parent et, en outre, le nombre de cas de niveau parent pour chaque résultat, et affichant les résultats dans un ordre de classement du nombre déterminé ; et (i) la liste des résultats ne correspondant qu'aux documents comprenant chaque terme de recherche au sein du même niveau de nœud (30, 32, 34, 36, 40) ; ou (ii) le procédé comprenant l'identification du terme de recherche associé au plus petit nombre de cas de niveau parent dans l'index (20).

13. Système pour l'exécution d'une recherche dans un corpus de documents (40), le système comprenant un processeur adapté pour :
indexer du contenu de chaque document du corpus pour la production d'un index (20) ;
en réponse à une requête comprenant une pluralité de termes de recherche soumis par un utilisateur, rechercher dans l'index (20) chaque terme de recherche ; et
fournir à l'utilisateur une liste de résultats correspondant aux documents qui comprennent chaque terme de recherche,
ladite indexation du contenu de chaque document (40) comprenant la production d'une structure arborescente (20) pour le contenu, et : ladite requête soumise comprenant un niveau de nœud spécifié (30, 32, 34, 36, 40) de ladite structure arborescente (20), de sorte que la liste de résultats fournie à l'utilisateur comprenne le ou chaque terme de recherche trouvé au niveau de nœud spécifié (30, 32, 34, 36, 40) ;
ledit processeur étant également adapté pour déterminer, pour le niveau de nœud spécifié (30, 32, 34, 36, 40), son niveau parent et, en outre, le nombre de cas de niveau parent pour chaque résultat, et afficher les résultats dans un ordre de classement du nombre déterminé ; et (i) ladite liste de résultats ne correspondant qu'aux documents comprenant chaque terme de recherche au sein du même niveau de nœud (30, 32, 34, 36, 40) ; ou (ii) ledit procédé comprenant l'identification du terme de recherche associé au plus petit nombre de cas de niveau parent dans l'index (20).
